# EUROPÄISCHE PATENTSCHRIFT

(11) **EP 4 157 052 B1**
(45) Veröffentlichungstag und Bekanntmachung des Hinweises auf die Patenterteilung: **31.07.2024**
(21) Anmeldenummer: 21730120.9
(22) Anmeldetag: 26.05.2021
(51) Int. Cl.: A47L 11/40

(54) **BODENREINIGUNGSSYSTEM**
FLOOR CLEANING SYSTEM
SYSTÈME DE NETTOYAGE DES SOLS

(30) Priorität: 27.05.2020 DE 102020114179
(43) Veröffentlichungstag der Anmeldung: 05.04.2023
(73) Patentinhaber: Alfred Kärcher SE & Co. KG, 71364 Winnenden (DE)
(72) Erfinder: WALZ, Jürgen, 71364 Winnenden (DE); SOBOTTA, Lukas, 71364 Winnenden (DE); BRÄNDLE, Alexander, 71364 Winnenden (DE); DAMMKÖHLER, Denis, 71364 Winnenden (DE); JAHN, Marten, 71364 Winnenden (DE); UNGERER, Miriam, 71364 Winnenden (DE)
(74) Vertreter: DTS Patent- und Rechtsanwälte PartmbB
(86) Internationale Anmeldenummer: PCT/EP2021/064012
(87) Internationale Veröffentlichungsnummer: WO 2021/239794

(56) Entgegenhaltungen:
- EP-A1- 3 047 782
- EP-A2- 2 387 931
- DE-A1- 102010 038 420
- DE-A1- 102018 117 670

## Beschreibung

Die vorliegende Erfindung betrifft ein Bodenreinigungssystem, umfassend eine benutzergeführte Bodenreinigungsmaschine zum Reinigen einer Bodenfläche, eine Sensoreinrichtung, eine Steuereinrichtung und eine ansteuerbare Anzeigeeinrichtung, wobei die Bodenreinigungsmaschine eine Bedieneinrichtung für einen Benutzer umfasst, ein Fahrwerk zum Verfahren auf der Bodenfläche und mindestens eine Reinigungsvorrichtung mit einem Reinigungswerkzeug und, vorzugsweise, einer Antriebseinrichtung für das Reinigungswerkzeug.

Außerdem betrifft die vorliegende Erfindung eine handgeführte Bodenreinigungsmaschine für ein derartiges Bodenreinigungssystem.

Eine Bodenreinigungsmaschine der eingangs genannten Art wird von einem Benutzer mittels der Bedieneinrichtung über die Bodenfläche geführt. Zum Abreinigen der Bodenfläche wird das mindestens eine Reinigungswerkzeug eingesetzt und dabei vorzugsweise über eine diesem zugeordnete Antriebseinrichtung angetrieben. Schmutz kann von der Bodenfläche abgelöst und beispielsweise mittels einer Schmutzaufnahmevorrichtung aufgenommen werden.

Trotz der Möglichkeiten der automatisierten Reinigung mittels einer selbstfahrenden und selbstlenkenden Bodenreinigungsmaschine weisen benutzergeführte Bodenreinigungsmaschinen eine hohe Bedeutung auf. Vorteilhaft sind beispielsweise die vereinfachte Konstruktion und die höhere Laufzeit der Bodenreinigungsmaschinen. Insbesondere können benutzergeführte Bodenreinigungsmaschinen in Umgebungen eingesetzt werden, bei denen aus Sicherheitsgründen ein Einsatz autonomer Reinigungsmaschinen nicht oder nur eingeschränkt möglich ist. Ein erfahrener Benutzer als "menschliche Schnittstelle" zwischen Reinigungsaufgabe und Bodenreinigungsmaschine vermag trotz aller Fortschritte im Bereich der autonomen Reinigung rascher zu entscheiden und Reinigungsaufgaben umzusetzen, weswegen Reinigungsaufgaben mit benutzergeführten Bodenreinigungsmaschinen zeitsparender ausgeführt werden können als mit autonomen Bodenreinigungsmaschinen.

Wünschenswert wäre es, den Benutzer bei der Führung der Bodenreinigungsmaschine im Hinblick auf ein besseres Reinigungsergebnis zu unterstützen, wobei vorzugsweise der Grad der Komplexität bei der Konstruktion der Bodenreinigungsmaschine verhältnismäßig gering gehalten werden kann.

Die EP 2 387 931 A2 beschreibt ein Verfahren zur Reinigung mindestens einer Bodenfläche mit einem selbstfahrenden und selbstlenkenden Bodenreinigungsgerät, das eine Antriebseinheit, eine Bodenreinigungseinheit und eine Steuereinheit zur Steuerung der Bewegung des Bodenreinigungsgerätes aufweist, wobei das Bodenreinigungsgerät mittels eines Kommunikationsgliedes über ein Kommunikationsnetz mit einer externen Bedieneinheit gekoppelt wird und Anweisungen einer Bedienperson an der Bedieneinheit zur Steuerung des Bodenreinigungsgerätes über das Kommunikationsnetz an die Steuereinheit übertragen werden. Mittels einer Kameraeinheit werden Abbilder der Bodenfläche erstellt, über das Kommunikationsnetz an die Bedieneinheit übertragen und von dieser dargestellt. Die Bodenfläche wird infolge einer Anweisung der Bedienperson anhand eines vorgebbaren Reinigungsprogrammes gereinigt.

Die DE 10 2018 117 670 A1 beschreibt eine Reinigungsvorrichtung in Form einer Scheuersaugmaschine. Die Reinigungsvorrichtung umfasst mindestens ein Reinigungswerkzeug zum Reinigen eines zu reinigenden Gegenstandes, eine Bedieneinheit für einen Benutzer, die mindestens ein Bedienelement zum Bedienen der Reinigungsvorrichtung umfasst, eine Steuereinheit zum Verarbeiten von Bedienanweisungen und eine an der Bedieneinheit angeordnete Aufnahme für ein der Reinigungsvorrichtung zuordenbares externes Zusatzgerät. Das Zusatzgerät weist eine Anzeigeeinrichtung mit einer Bildanzeige auf und ist in definierter Position in der Aufnahme entnehmbar positionierbar. Anzeigeinformationen sind von der Reinigungsvorrichtung zur Darstellung an der Bildanzeige an das in der Aufnahme positionierte Zusatzgerät übertragbar.

Aufgabe der vorliegenden Erfindung ist es, ein gattungsgemäßes Bodenreinigungssystem mit der Möglichkeit der Unterstützung des Benutzers bei der Durchführung der Reinigungsaufgabe bereitzustellen.

Diese Aufgabe wird bei einem Bodenreinigungssystem der eingangs genannten Art erfindungsgemäß dadurch gelöst, dass von der Steuereinrichtung im Betrieb der Bodenreinigungsmaschine anhand von Signalen der Sensoreinrichtung ein auf der Bodenfläche ausgehend von einem Ausgangspunkt zurückgelegter Reinigungspfad ermittelbar ist und dass die Steuereinrichtung die Anzeigeeinrichtung zum Anzeigen von reinigungsbezogenen Informationen abhängig vom ermittelten zurückgelegten Reinigungspfad ansteuert.

Bei dem erfindungsgemäßen Bodenreinigungssystem ist die Steuereinrichtung ausgebildet, an der Anzeigeeinrichtung reinigungsbezogene Informationen, beispielsweise mittels augmentierter Realität (AR, Augmented Reality) zur Unterstützung des Benutzers bei der Durchführung einer Reinigungsaufgabe darzustellen. Hierbei ist insbesondere vorgesehen, dass während des Betriebs der Bodenreinigungsvorrichtung der zurückgelegte Reinigungspfad ermittelt wird und dass die reinigungsbezogenen Informationen von dem ermittelten Reinigungspfad abhängen. Der Reinigungspfad wird ausgehend von einem Ausgangspunkt ermittelt. Die reinigungsbezogenen Informationen können beispielsweise Informationen über den bereits zurückgelegten Reinigungspfad umfassen. Hierbei kann insbesondere berücksichtigt werden, dass dem Benutzer der Ausgangspunkt bereits bekannt ist, da die Bodenreinigungsmaschine benutzergeführt ist. Darüber hinaus kann vorzugsweise berücksichtigt werden, dass dem Benutzer der Raum, den er mit der Bodenreinigungsmaschine reinigt, bekannt ist. Dadurch kann vorzugsweise eine Notwendigkeit zur Kartierung der Informationen betreffend den Reinigungspfad (Pfadverlauf und Ausgangspunkt) entfallen. Die diesbezügliche Ausstattung der Bodenreinigungsmaschine kann zu deren konstruktiver Vereinfachung im Vergleich zu autonomen Bodenreinigungsmaschinen eingespart werden.

Nach dem vorstehend Gesagten ist es günstig, wenn der zurückgelegte Reinigungspfad frei von Kartierung ermittelt wird. Insbesondere kann eine Lokalisierung der Bodenreinigungsmaschine in der Umgebung oder dem die Bodenfläche enthaltenden Raum entfallen, insbesondere weil der Benutzer die Bodenreinigungsmaschine selbst durch die Umgebung bzw. durch den Raum führt. Die Anforderungen an die Sensoreinrichtung und die Steuereinrichtung können auf diese Weise im Vergleich zu autonomen Bodenreinigungsmaschinen erheblich verringert werden. Eine aufwändige Datenerfassung und -verarbeitung ist in Anbetracht der "menschlichen Schnittstelle" des Benutzers vermeidbar.

Insbesondere ist vorteilhafterweise keine Karte eines die Bodenfläche aufweisenden Raumes vorgesehen, innerhalb welcher Karte der Ausgangspunkt und/oder der Reinigungspfad lokalisiert wird. Das Bodenreinigungssystem ist insbesondere kartenlos. Hierdurch können beispielsweise im Bereich der autonomen Bodenreinigung ansonsten erforderliche charakteristische Landmarken (beispielsweise Beacons), die im Zusammenhang mit der Nutzung von Karten eingesetzt werden müssen, eingespart werden.

Vorzugsweise wird der Ausgangspunkt und/oder der zurückgelegte Reinigungspfad ohne Positionsinformation in Bezug auf die Bodenfläche und/oder einen die Bodenfläche aufweisenden Raum ermittelt. Dementsprechend wird vorzugsweise lediglich der zurückgelegte Reinigungspfad ermittelt, jedoch keine Positionsinformation und/oder Streckeninformation in einem absoluten Bezugssystem (z. B. über GPS) und/oder einem relativen Bezugssystem (z. B. raumbezogen über Beacons oder dergleichen). Ein Tracking der Bodenreinigungsmaschine in einer Karte kann entfallen.

Der zurückgelegte Reinigungspfad kann beispielsweise nach Art eines Polygonzuges festgestellt werden. Beispielsweise kann der Reinigungspfad nach Art der Koppelnavigation unter Nutzung der Signale der Sensoreinrichtung ermittelt werden. Es erfolgt insbesondere keine positionelle Verknüpfung der Informationen des Reinigungspfades mit einer Karte und/oder einem Bezugssystem.

Vorteilhaft ist es, wenn der zurückgelegte Reinigungspfad nur ermittelt wird, wenn die Antriebseinrichtung mindestens eines Reinigungswerkzeuges aktiviert ist. Das Reinigungswerkzeug ist mittels der hierfür bevorzugt vorgesehenen Antriebseinrichtung antreibbar. Unter Nutzung der Antriebseinrichtung lässt sich beispielsweise überprüfen, ob die Reinigungsaufgabe vom Benutzer ordnungsgemäß abgearbeitet wurde. Wenn die Bodenreinigungsmaschine lediglich bewegt wird, die Antriebseinrichtung jedoch nicht aktiviert ist, ist von Nichterfüllen der Reinigungsaufgabe und einer Leerfahrt der Bodenreinigungsmaschine auszugehen.

Die Sensoreinrichtung kann als mindestens einen Sensor beispielsweise Radencoder für das Fahrwerk umfassen oder ausbilden. Mittels der Signale der Radencoder können die zurückgelegte Strecke der Bodenreinigungsmaschine und/oder Fahrtrichtungsänderungen ermittelt werden.

Die Sensoreinrichtung kann als mindestens einen Sensor beispielsweise einen Beschleunigungssensor aufweisen. Mittels des Beschleunigungssensors können zum Beispiel Anfahr- und Verzögerungsvorgänge und/oder Kurvenfahrten der Bodenreinigungsmaschine bestimmt werden, um den Reinigungspfad zu ermitteln.

Die Sensoreinrichtung kann als mindestens einen Sensor beispielsweise einen Drehratensensor umfassen oder ausbilden. Über den Drehratensensor können beispielsweise Richtungsänderungsinformationen zur Ermittlung des Reinigungspfades erfasst werden.

Die Sensoreinrichtung kann als mindestens einen Sensor beispielsweise eine Kamera umfassen oder ausbilden. Kamerainformationen können zum Beispiel mittels Bildverarbeitungsalgorithmen ausgewertet werden, um die zurückgelegte Strecke und/oder Richtungsänderungen festzustellen.

Günstigerweise umfasst das Bodenreinigungssystem eine Kamera zum Bereitstellen von Aufnahmen einer der Bodenreinigungsmaschine in einer Bewegungsrichtung vorausgelagerten Umgebung, wobei an der Anzeigeeinrichtung die Aufnahmen gemeinsam mit den reinigungsbezogenen Informationen darstellbar sind. Auf diese Weise können die reinigungsbezogenen Informationen für den Benutzer benutzerfreundlich visualisiert werden. Die Aufnahmen der Umgebung können ebenfalls an der Anzeigeeinrichtung dargestellt werden. Auf diese Weise ist eine benutzerfreundliche Möglichkeit gegeben, den Benutzer zum Führen der Bodenreinigungsmaschine anzuleiten.

Günstig ist es insbesondere, wenn die reinigungsbezogenen Informationen den Aufnahmen der Umgebung an der Anzeigeeinrichtung grafisch überlagert dargestellt werden. Hierbei können die reinigungsbezogenen Informationen insbesondere mittels augmentierter Realität (AR, Augmented Reality) dargestellt werden, abhängig vom zurückgelegten Reinigungspfad.

Die Kamera ist vorzugsweise in definierter Relativposition an der Bodenreinigungsmaschine angeordnet. Auf diese Weise kann eine vordefinierte geometrische Beziehung der Kamera zu den Aufnahmen der Umgebung ohne erforderliche Lokalisierung und Kartierung erstellt werden.

Beispielsweise umfasst die Bodenreinigungsmaschine die Kamera.

Alternativ oder ergänzend kann vorgesehen sein, dass ein tragbares Zusatzgerät, hierauf wird nachfolgend noch eingegangen, die Kamera umfasst.

Die reinigungsbezogenen Informationen umfassen vorzugsweise zumindest eines der Folgenden, wobei diese Informationen, zumindest teilweise, bevorzugt mittels augmentierter Realität den Aufnahmen der Kamera an der Anzeigeeinrichtung überlagert dargestellt werden können:
- eine Darstellung bislang gereinigter Abschnitte der Bodenfläche;
- eine Darstellung noch nicht gereinigter Abschnitte der Bodenfläche;
- eine Darstellung noch zu reinigender Abschnitte der Bodenfläche;
- Informationen für den Benutzer zum Führen der Bodenreinigungsmaschine, insbesondere Anweisungen zur Verfahrrichtung der Bodenreinigungsmaschine;
- Informationen betreffend den erfolgten Einsatz mindestens eines Reinigungswerkzeuges bei gereinigten Abschnitten der Bodenfläche;
- Informationen betreffend den empfohlenen Einsatz mindestens eines Reinigungswerkzeuges bei ungereinigten Abschnitten der Bodenfläche;
- Informationen betreffend den Wert mindestens eines Betriebsparameters bei gereinigten Abschnitten der Bodenfläche;
- Informationen betreffend den empfohlenen Wert mindestens eines Betriebsparameters bei ungereinigten Abschnitten der Bodenfläche.

Beispielhafte Betriebsparameter sind die Menge an auf die Bodenfläche aufgebrachter Reinigungsflüssigkeit, die Dosierung einer Reinigungschemikalie, der Anpressdruck des Reinigungswerkzeugs oder die Antriebsleistung für das Reinigungswerkzeug.

Vorgesehen sein kann, dass zumindest eine Sensoreinrichtung, zumindest eine Steuereinrichtung und/oder zumindest eine Anzeigeeinrichtung vorgesehen ist bzw. sind. Die vorstehend genannten Einrichtungen können beispielsweise auf die Bodenreinigungsmaschine und ein Zusatzgerät des Bodenreinigungssystems verteilt sein, wobei die Bodenreinigungsmaschine und das Zusatzgerät jede der vorstehend genannten Einrichtungen aufweisen kann.

Beispielsweise kann vorgesehen sein, dass die Bodenreinigungsmaschine zumindest eines der Folgenden zumindest teilweise umfasst oder ausbildet:
- die Sensoreinrichtung;
- die Steuereinrichtung;
- die Anzeigeeinrichtung.

Das Bodenreinigungssystem kann mindestens ein tragbares Zusatzgerät umfassen, das über zusammenwirkende Kommunikationsschnittstellen mit der Bodenreinigungsmaschine in Wirkverbindung steht. Die Verbindung kann kabellos und/oder kabelgebunden sein.

Das Zusatzgerät kann mindestens eines der Folgenden zumindest teilweise umfassen oder ausbilden:
- die Sensoreinrichtung;
- die Steuereinrichtung;
- die Anzeigeeinrichtung.

Bei einer bevorzugten Ausführung des Bodenreinigungssystems kann als tragbares Zusatzgerät beispielsweise ein Tablet-Computer, ein Smartphone oder ein Head-mounted-Display vorgesehen sein, wobei letzteres beispielsweise als Datenbrille ausgestaltet ist.

Von Vorteil ist es, wenn die Bodenreinigungsmaschine eine Aufnahme zur lösbaren Anordnung des mindestens einen tragbaren Zusatzgerätes umfasst. Die Aufnahme ist vorzugsweise an der Bedieneinrichtung angeordnet.

Günstigerweise ist das Zusatzgerät, und mit diesem eine vom Zusatzgerät umfasste Kamera zum Erstellen von Aufnahmen der Umgebung, dabei in definierter Relativposition an der Bodenreinigungsmaschine anordenbar.

Das Bodenreinigungssystem umfasst vorzugsweise eine Speichereinrichtung zum Speichern mindestens eines zurückgelegten Reinigungspfades.

Alternativ oder ergänzend umfasst das Bodenreinigungssystem vorzugsweise eine Speichereinrichtung zum Speichern mindestens eines vorgegebenen Reinigungspfades. Insbesondere können der zurückgelegte und der vorgegebene Reinigungspfad in einer gemeinsamen Speichereinrichtung gespeichert werden.

Beispielsweise ist vorgesehen, dass die Bodenreinigungsmaschine und/oder dass das Zusatzgerät die Speichereinrichtung zumindest teilweise umfasst.

Von Vorteil ist es, wenn der zurückgelegte Reinigungspfad und/oder der vorgegebene Reinigungspfad verknüpft mit reinigungsbezogenen Informationen betreffend den Einsatz mindestens eines Reinigungswerkzeuges und/oder den Wert mindestens eines Betriebsparameters speicherbar ist. Beispielsweise kann ein zurückgelegter Reinigungspfad zusammen mit den ergänzenden reinigungsbezogenen Informationen ausgewertet werden. Der Einsatz des Reinigungswerkzeuges und/oder der Wert des Betriebsparameters kann zur Überprüfung der Reinigungsaufgabe ausgewertet werden. Die gespeicherten Informationen können verwendet werden, um Benutzer bei der Durchführung der Reinigungsaufgaben anzuleiten. Auf Basis der gespeicherten Informationen können Verbesserungsvorschläge für die Durchführung von Reinigungsaufgaben unterbreitet werden. Der vorgegebene Reinigungspfad kann von einem eine Reinigungsaufgabe ausführenden Benutzer eingesetzt werden, im Hinblick auf ein bestmögliches Reinigungsergebnis.

Vorzugsweise ist eine Mehrzahl zurückgelegter Reinigungspfade speicherbar und hinsichtlich eines optimierten Reinigungspfades auswertbar, insbesondere verknüpft mit Informationen betreffend den erfolgten Einsatz mindestens eines Reinigungswerkzeuges und/oder den Wert mindestens eines Betriebsparameters. Auf diese Weise können Maßnahmen zum Verbessern des Reinigungsergebnisses durch Optimierung des Reinigungspfades, den Einsatz des Reinigungswerkzeuges und/oder den Wert mindestens eines Betriebsparameters vorgenommen werden.

Vorteilhaft kann es sein, wenn der mindestens eine vorgegebene Reinigungspfad bei Aufnahme der Reinigung aktivierbar und reinigungsbezogene Informationen an der Anzeigeeinrichtung darstellbar sind. Beispielsweise kann der Benutzer bei der Aufnahme der Reinigung am Ausgangspunkt den vorgegebenen Reinigungspfad und reinigungsbezogene Informationen aus der Speichereinrichtung laden. An der Anzeigeeinrichtung ist vorzugsweise zumindest eine der folgenden Informationen darstellbar:
- Informationen für den Benutzer zum Führen der Bodenreinigungsmaschine, insbesondere Anweisungen zur Verfahrrichtung der Bodenreinigungsmaschine;
- eine Darstellung zu reinigender Abschnitte der Bodenfläche;
- Informationen betreffend den empfohlenen Einsatz mindestens eines Reinigungswerkzeuges bei ungereinigten Abschnitten der Bodenfläche;
- Informationen betreffend den empfohlenen Wert mindestens eines Betriebsparameters bei ungereinigten Abschnitten der Bodenfläche.

Obige Informationen können vom Benutzer als Anleitung zur Durchführung einer Reinigungsaufgabe basierend auf dem vorgegebenen Reinigungspfad aufgefasst werden.

Günstigerweise umfasst das Bodenreinigungssystem eine Kamera zum Bereitstellen von Aufnahmen einer der Bodenreinigungsmaschine in einer Bewegungsrichtung vorausgelagerten Umgebung, wobei an der Anzeigeeinrichtung die Aufnahmen gemeinsam mit den reinigungsbezogenen Informationen darstellbar sind. Die obigen Informationen können vorzugsweise mittels augmentierter Realität an der Anzeigeeinrichtung den Aufnahmen der Umgebung überlagert dargestellt werden. Beispielsweise können Verfahrinformationen mittels Richtungspfeilen dargestellt werden. Eine zu reinigende Fläche kann durch eine Farbe und/oder Textur hervorgehoben werden. Entsprechendes gilt für eine bereits gereinigte Fläche. Alternativ oder ergänzend kann der Einsatz eines Reinigungswerkzeuges mittels Farbe und/oder Textur symbolisiert werden. Entsprechendes kann zum Beispiel für den Wert eines Betriebsparameters vorgesehen sein.

Der vorgegebene Reinigungspfad umfasst vorzugsweise eine Information über den Ausgangspunkt für den Reinigungsvorgang, die an der Anzeigeeinrichtung darstellbar ist. Da der Benutzer als Schnittstelle zwischen der Reinigungsaufgabe und der Bodenreinigungsmaschine agiert, kann der Benutzer die Bodenreinigungsmaschine selbst zu einem vorgeschlagenen Ausgangspunkt führen. Zu diesem Zweck kann beispielsweise die Bezeichnung des Ausgangspunktes in Worten und/oder eine Darstellung des Ausgangspunktes mittels einer Fotografie oder eines Piktogrammes ausreichend sein.

Das Bodenreinigungssystem kann bei einer bevorzugten Ausführungsform mindestens ein Lokalisierungselement umfassen, das einem zu reinigenden Raum zugeordnet ist, wobei in der Speichereinrichtung eine Verknüpfung des Raumes mit dem vorgegebenen Reinigungspfad gespeichert ist, und wobei mittels der Sensoreinrichtung das Lokalisierungselement erfassbar und der vorgegebene Reinigungspfad abhängig vom erkannten Lokalisierungselement bereitstellbar ist. Beispielsweise sind in der Speichereinrichtung mehrere Reinigungspfade gespeichert, die einem jeweiligen Raum zugeordnet sind. Über die Sensoreinrichtung kann der Raum erkannt werden, dessen zugeordneter Reinigungspfad für den Reinigungsvorgang zu laden ist. Das Lokalisierungselement kann zum Beispiel kabellos erkannt werden. Denkbar ist der Einsatz von RFID-Technologie oder der Einsatz eines Beacons (beispielsweise mittels Bluetooth erfassbar), um den Raum zu identifizieren.

Bei der zuletzt erwähnten vorteilhaften Ausführungsform ist es vorzugsweise insbesondere entbehrlich, eine Karte des Raumes wie vorstehend erläutert vorzusehen. Der vorgegebene Reinigungspfad kann frei von Kartierung und Positionsinformation gespeichert werden.

Günstig kann es sein, wenn der zurückgelegte Reinigungspfad und der vorgegebene Reinigungspfad von der Steuereinrichtung auf Übereinstimmung prüfbar sind. Während der Durchführung des Reinigungsvorgangs kann von der Steuereinrichtung beispielsweise überprüft werden, ob der ermittelte zurückgelegte Reinigungspfad mit dem vorgegebenen Reinigungspfad übereinstimmt oder von diesem abweicht.

Bei fehlender Übereinstimmung kann beispielsweise ein diesbezüglicher Hinweis an den Benutzer ausgegeben werden, insbesondere an der Anzeigeeinrichtung. Der Benutzer kann auf diese Weise darüber informiert werden, dass seine Art der Bodenreinigung von der vorgeschlagenen Art der Bodenreinigung abweicht.

Alternativ oder ergänzend kann vorgesehen sein, dass bei fehlender Übereinstimmung der in der Speichereinrichtung gespeicherte vorgegebene Reinigungspfad nach Abschluss der Reinigung durch den ermittelten Reinigungspfad ersetzt wird. Dieser Möglichkeit liegt die Überlegung zugrunde, dass der Reinigungsvorgang vom Benutzer zum Beispiel verbessert ausgeführt werden kann und der vorgegebene Reinigungspfad ersetzt wird. Denkbar ist auch, dass die Geometrie des Raumes und damit die Möglichkeit, die Bodenreinigungsmaschine zu verfahren, vom vorgegebenen Reinigungspfad abweichen, und dass für künftige Reinigungsvorgänge ein geänderter Reinigungspfad vorgeschlagen wird.

Das Bodenreinigungssystem kann vorzugsweise eine Projektionseinrichtung umfassen, wobei reinigungsbezogene Informationen bevorzugt auf die Bodenfläche projizierbar sind. Bei den reinigungsbezogenen Informationen abhängig vom ermittelten Reinigungspfad und/oder basierend auf dem vorgegebenen Reinigungspfad können die Informationen zur Visualisierung für den Benutzer projiziert werden. Denkbar ist es insbesondere, die vorstehend genannten Informationen zu visualisieren: gereinigte Abschnitte der Bodenfläche, noch nicht gereinigte Abschnitte, zu reinigende Abschnitte, Verfahrinformationen, Informationen betreffend den Einsatz eines Reinigungswerkzeuges, Informationen betreffend den Wert eines Betriebsparameters.

Die Bodenreinigungsmaschine kann beispielsweise einen Fahrantrieb für Antriebsräder des Fahrwerks umfassen.

Die Bodenreinigungsmaschine kann zum Beispiel eine Nachlaufmaschine, eine Aufsitzmaschine oder eine Aufstehmaschine sein.

Die Bodenreinigungsmaschine kann zum Beispiel eine Scheuersaugmaschine oder eine Kehrmaschine sein.

Das Bodenreinigungssystem kann beispielsweise eine Mehrzahl von Bodenreinigungsmaschinen umfassen. Insbesondere kann vorgesehen sein, dass das vorstehend erwähnte Zusatzgerät wahlweise mit einer der Bodenreinigungsmaschinen zum Einsatz kommen kann.

Eine erfindungsgemäße Bodenreinigungsmaschine ist zur Ausbildung eines Bodenreinigungssystems der vorstehend genannten Art geeignet.

Die nachfolgende Beschreibung einer bevorzugten Ausführungsform der Erfindung dient im Zusammenhang mit der Zeichnung der näheren Erläuterung der Erfindung. Es zeigen:
- Figur 1:: eine schematische perspektivische Darstellung eines erfindungsgemäßen Bodenreinigungssystems, umfassend eine Bodenreinigungsmaschine und ein externes Zusatzgerät;
- Figur 2:: eine schematische Draufsicht auf eine Bedieneinrichtung der Bodenreinigungsmaschine aus Figur 1, an der das Zusatzgerät angeordnet ist;
- Figur 3:: eine schematische Darstellung des Bildinhalts einer Anzeigeeinrichtung des Bodenreinigungssystems aus Figur 1, wobei als Bildinhalt u. a. reinigungsbezogene Informationen dargestellt sind; und
- Figur 4:: eine schematische Darstellung eines mit der Bodenreinigungsmaschine gereinigten Raumes, Reinigungspfaden und reinigungsbezogenen Informationen.

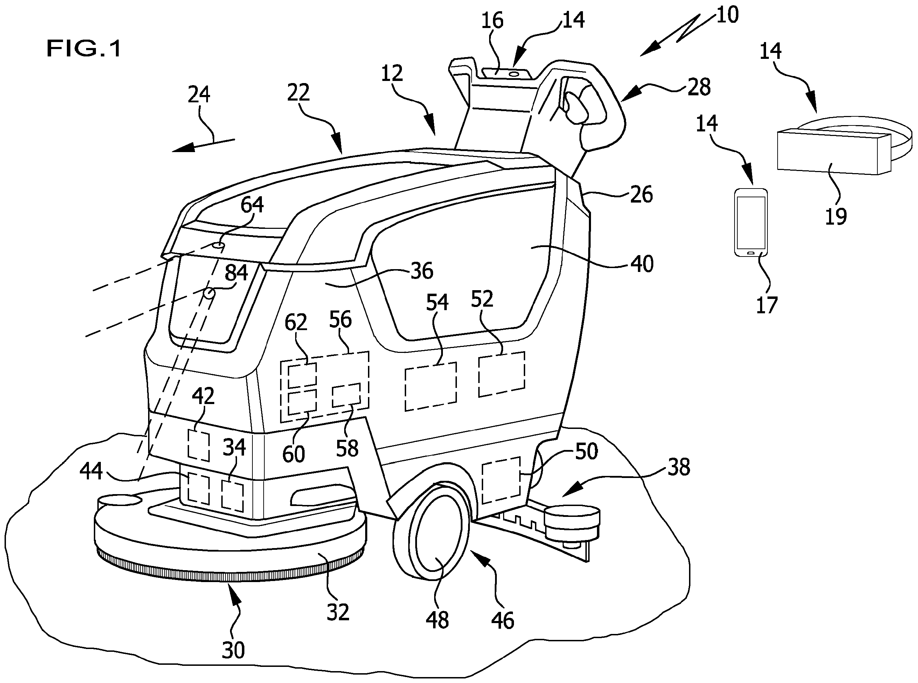

Figur 1 zeigt in perspektivischer Darstellung eine insgesamt mit dem Bezugszeichen 10 belegte vorteilhafte Ausführungsform eines erfindungsgemäßen Bodenreinigungssystems. Das Bodenreinigungssystem 10 umfasst eine erfindungsgemäße Bodenreinigungsmaschine 12 und ein externes, vorliegend tragbares Zusatzgerät 14, das als Tablet-Computer 16 ausgestaltet ist.

Als Zusatzgerät 14 kann alternativ oder ergänzend ein Smartphone 17 und/oder ein als Datenbrille ausgestaltetes Head-mounted-Display 19 des Bodenreinigungssystems 10 zum Einsatz kommen.

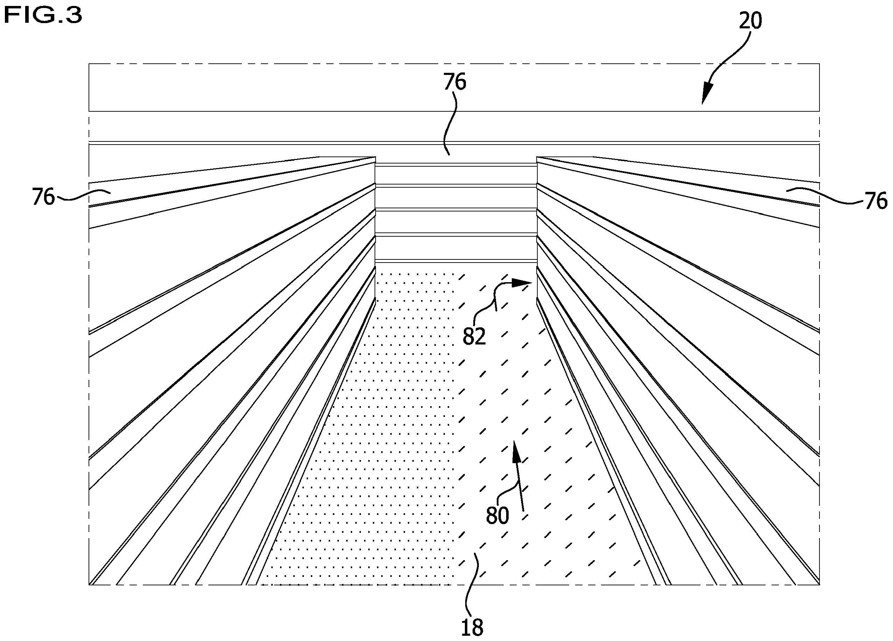

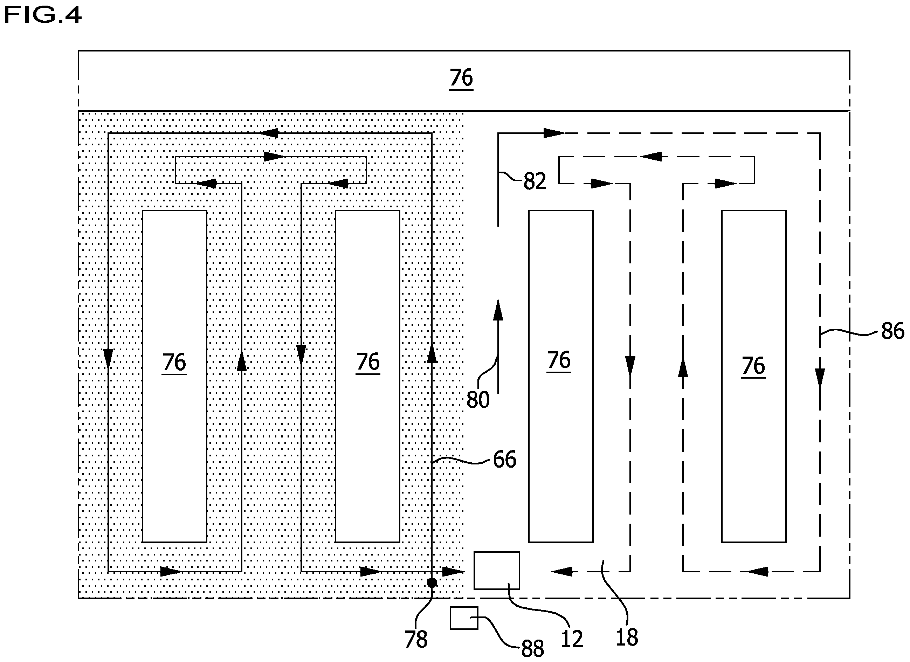

Das Bodenreinigungssystem 10 dient zur Reinigung einer Bodenfläche 18, wobei diese die Bodenfläche eines in den Figuren 3 und 4 schematisch dargestellten Raumes 20 ist.

Die Bodenreinigungsmaschine 12 ist benutzergeführt und kann von einem in der Zeichnung nicht dargestellten Benutzer über die Bodenfläche 18 zu deren Reinigung verfahren werden. Die Arbeitsrichtung wird dabei vom Benutzer ausgewählt und eingeschlagen.

Vorliegend ist die Bodenreinigungsmaschine 12 als benutzergeführte Scheuersaugmaschine 22 ausgestaltet. Es handelt sich dabei insbesondere um eine Nachlaufmaschine, die vom Benutzer bezogen auf eine Bewegungsrichtung 24 über eine an der Rückseite 26 angeordnete Bedieneinrichtung 28 gesteuert wird.

Die Bodenreinigungsmaschine 12 umfasst eine Reinigungseinrichtung 30. Die Reinigungseinrichtung 30 umfasst ein Reinigungswerkzeug 32 und eine Antriebseinrichtung 34 für das Reinigungswerkzeug 32. Im vorliegenden Beispiel ist das Reinigungswerkzeug 32 eine mittels der Antriebseinrichtung 34 um eine Hochachse drehend antreibbare Tellerbürste.

Schmutz kann von der Bodenfläche 18 unter der Wirkung des Reinigungswerkzeugs 32 abgelöst werden. Unterstützend kommt eine Reinigungsflüssigkeit zum Einsatz, insbesondere Wasser, die in einem Vorratsbehälter 36 bevorratet ist.

Das Gemisch aus Schmutz und Reinigungsflüssigkeit kann mittels einer Schmutzaufnahmeeinrichtung 38 von der Bodenfläche 18 aufgenommen und in einen Schmutzflüssigkeitsbehälter 40 überführt werden.

Die Bodenreinigungsmaschine 12 umfasst eine Dosiereinrichtung 42. Über die Dosiereinrichtung 42 kann der Reinigungsflüssigkeit eine die Reinigungsleistung steigernde Reinigungschemikalie beigemischt werden.

Darüber hinaus umfasst die Bodenreinigungsmaschine 12 eine Andrückeinrichtung 44, die beispielsweise Bestandteil der Reinigungseinrichtung 30 sein kann. Mittels der Andrückeinrichtung 40 kann ein Anpressdruck des Reinigungswerkzeugs 32 auf die Bodenfläche 18 eingestellt werden.

Die Bodenreinigungsmaschine 12 umfasst ferner ein Fahrwerk 46 mit Antriebsrädern. Hiervon ist in Figur 1 nur ein Antriebsrad 48 gezeigt. Ferner ist ein Fahrantrieb 50 für die Antriebsräder 48 vorgesehen.

Weiter umfasst die Bodenreinigungsmaschine 12 eine Steuereinrichtung 52, eine Speichereinrichtung 54 und eine Sensoreinrichtung 56. Die Speichereinrichtung 54 und die Sensoreinrichtung 56 sind mit der Steuereinrichtung 52 gekoppelt und können zumindest teilweise in diese integriert sein.

In an sich bekannter Weise können Bedienanweisungen des Benutzers an der Bedieneinrichtung 28 von der Steuereinrichtung 52 ausgewertet und zur Ansteuerung der Reinigungseinrichtung 30, der Dosiereinrichtung 42, der Andrückeinrichtung 44, der Schmutzaufnahmeeinrichtung 38 und des Fahrantriebs 50 umgesetzt werden.

Die Sensoreinrichtung 56 umfasst mindestens einen Sensor, mit dem ein Bewegungszustand der Bodenreinigungsmaschine 12 erfassbar ist. Insbesondere kann der von der Bodenreinigungsmaschine 12 während eines Reinigungsvorganges zurückgelegte Weg erfasst werden. Ferner können Fahrtrichtungsänderungen der Bodenreinigungsmaschine 12 erfasst werden.

Als Sensoren kann die Sensoreinrichtung 56 beispielsweise Radencoder 58 umfassen, die den Antriebsrädern 48 zugeordnet sind.

Alternativ oder ergänzend ist beispielsweise ein Beschleunigungssensor 60 vorgesehen.

Alternativ oder ergänzend ist beispielsweise ein Drehratensensor 62 vorgesehen, ausgestaltet als Gyroskop.

Weiter kann beispielsweise eine Kamera 64 vorgesehen sein, zum Beispiel als Bestandteil der Sensoreinrichtung 56, um Aufnahmen der Umgebung der Bodenreinigungsmaschine 12 zu erstellen.

Anhand der Signale der Sensoreinrichtung 56 kann die Steuereinrichtung 52 im Betrieb der Bodenreinigungsmaschine 12 ermitteln, was für einen Reinigungspfad die Bodenreinigungsmaschine 12 während des Betriebs zurückgelegt hat. Die Figur 4 zeigt beispielhaft einen in dem Raum 20 skizzierten Reinigungspfad 66, den der Benutzer während des Reinigungsvorgangs mit der Bodenreinigungsmaschine 12 abgefahren ist. Es versteht sich, dass diese beispielhafte Darstellung nicht-limitierend für die vorliegende Erfindung ist.

Das Bodenreinigungssystem 10 umfasst mindestens eine Anzeigeeinrichtung. Vorliegend weist das Zusatzgerät 14 eine Anzeigeeinrichtung 68 auf.

Das Bodenreinigungssystem 10 ist ausgebildet, an einer Bildanzeige 70 der Anzeigeeinrichtung 68 Informationen darzustellen. Die Informationen können von der Steuereinrichtung 52 bereitgestellt werden. Zu diesem Zweck können das Zusatzgerät 14 und die Bodenreinigungsmaschine 12 über Kommunikationsschnittstellen in Kommunikationsverbindung stehen. Die Kommunikationsverbindung kann kabellos und/oder kabelgebunden sein.

Die Bodenreinigungsmaschine 12 umfasst eine Aufnahme 72 für das Zusatzgerät 14. Vorliegend ist die Aufnahme 72 an der Bedieneinrichtung 28 angeordnet. Das Zusatzgerät 14 kann an der Aufnahme 72 lösbar positioniert werden.

Ist das Zusatzgerät 14 in der Aufnahme 72 positioniert, weist es eine definierte Position an der Bodenreinigungsmaschine 12 auf.

Das Zusatzgerät 14 umfasst eine Kamera 74, insbesondere ausgestaltet als Digitalkamera.

Mittels der Kamera 74 kann eine Umgebung der Bodenreinigungsmaschine 12 erfasst und diesbezügliche Aufnahmen bereitgestellt werden. Hierbei wird insbesondere die in der Bewegungsrichtung 24 der Bodenreinigungsmaschine 12 vorgelagerte Umgebung erfasst. Die Aufnahmen können an der Anzeigeeinrichtung 68 dargestellt werden.

Figur 3 stellt dies schematisch für die Umgebung der Bodenreinigungsmaschine 12 im Raum 20 dar. Hierbei wird ein Teil des Raumes 20 an der Anzeigeeinrichtung 68 dargestellt, insbesondere ein Abschnitt der Bodenfläche 18. Darüber hinaus werden im Raum 20 enthaltene Objekte 76 dargestellt. Bei den Objekten 76 handelt es sich zum Beispiel um Regale, wenn der Raum 20 ein Verkaufsraum ist, beispielsweise eines Ladengeschäftes.

Figur 4 zeigt schematisch die Position der Bodenreinigungsmaschine 12 im Raum 20 bei Einnahme derjenigen Position, die in der Darstellung gemäß Figur 3 an der Anzeigeeinrichtung 68 gezeigt ist.

Durch die definierte Position des Zusatzgerätes 14 in der Aufnahme 72 ist sichergestellt, dass das Erfassungsfeld der Kamera 74 bezogen auf die Bodenreinigungsmaschine 12 eine definierte Position einnimmt.

Alternativ oder ergänzend zu den Aufnahmen der Kamera 74 können Aufnahmen der Kamera 64 von der Umgebung erstellt und an der Anzeigeeinrichtung 68 dargestellt werden.

Während des Betriebs des Bodenreinigungssystems 10 wird, wie erwähnt, anhand des Signals der Sensoreinrichtung 56 der zurückgelegte Reinigungspfad 66 ermittelt. Hierbei wird der Reinigungspfad 66 ausgehend von einem Ausgangspunkt 78 bestimmt, an dem der Reinigungsbetrieb aufgenommen wird.

Im vorliegenden Fall erfolgt die Ermittlung des Reinigungspfades 66 frei von Kartierung. Insbesondere ist keine Karte des Raumes 20 vorgesehen, innerhalb welcher Karte der Ausgangspunkt 78, der Reinigungspfad 66 und die Bodenreinigungsmaschine 12 lokalisiert werden. Dementsprechend werden der Reinigungspfad 66 und der Ausgangspunkt 78 ohne Positionsinformation in Bezug auf die Bodenfläche 18 und den Raum 20 ermittelt, insbesondere sowohl in Bezug auf ein absolutes Bezugssystem als auch in Bezug auf ein relatives Bezugssystem.

Die Ermittlung des Reinigungspfades 66 dient vorzugsweise unter anderem zur Kontrolle, ob eine Reinigungsaufgabe den Vorgaben entsprechend ausgeführt worden ist. Zu diesem Zweck ist vorzugsweise insbesondere vorgesehen, dass der Reinigungspfad 66 nur ermittelt wird, wenn das Reinigungswerkzeug 32 angetrieben und insbesondere die Antriebseinrichtung 34 aktiviert ist.

Die Bestimmung des Reinigungspfades 66 kann beispielsweise als Polygonzug erfolgen, zum Beispiel mit Methoden der Koppelnavigation basierend auf den Signalen der Sensoreinrichtung 56.

Im Betrieb der Bodenreinigungsmaschine 12 ist das Zusatzgerät 14 in der Aufnahme 72 positioniert. Ohne Beschränkung der Allgemeingültigkeit wird davon ausgegangen, dass die Bodenreinigungsmaschine 12 entlang des dargestellten Reinigungspfades 66 über die Bodenfläche 18 bewegt wird. Der zurückgelegte Reinigungspfad 66 wird von der Steuereinrichtung 52 ermittelt.

Abhängig vom zurückgelegten Reinigungspfad 66 steuert die Steuereinrichtung 52 die Anzeigeeinrichtung 68 zum Darstellen von reinigungsbezogenen Informationen betreffend die Reinigung der Bodenfläche 18 an. Insbesondere besteht die Möglichkeit, diese reinigungsbezogenen Informationen mittels augmentierter Realität (AR, Augmented Reality) darzustellen. Die Informationen werden dabei günstigerweise den Aufnahmen der Umgebung überlagert, die mittels der Kamera 74 gewonnen werden.

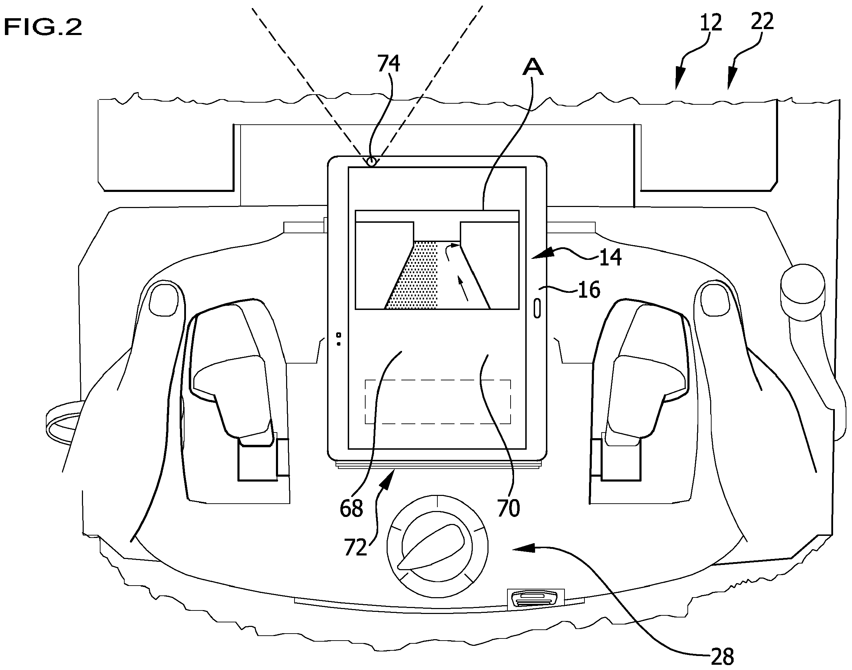

Figur 2 stellt den Inhalt der Bildanzeige 70 schematisch dar. Eine vergrößerte Darstellung von Detail A ist in Figur 3 schematisch dargestellt.

Die reinigungsbezogenen Informationen werden vorzugsweise frei von Kartierung und ohne Positionsinformation dargestellt.

Die Reinigungsinformationen können beispielsweise Informationen über bereits gereinigte Abschnitte der Bodenfläche 18 aufweisen, ermittelt anhand des Reinigungspfades 66. Dies ist in Figur 3 schematisch durch eine punktierte Textur auf der Bodenfläche 18 gezeigt.

Die reinigungsbezogenen Informationen können beispielsweise eine Kennzeichnung noch nicht gereinigter Bereiche der Bodenfläche 18 umfassen. Dies ist in Figur 3 anhand einer gestrichelten Textur eines Abschnittes der Bodenfläche 18 dargestellt.

Auch der Darstellung der reinigungsbezogenen Informationen wird lediglich die Auswertung des Reinigungspfades 66 zugrunde gelegt. Da der Steuereinrichtung 52 die Bewegungen der Bodenreinigungsmaschine 12 bekannt sind, kann sie insbesondere ermitteln, wo die Bodenreinigungsmaschine 12 noch nicht gewesen ist.

Die Einpassung von Texturen an Bodenflächenabschnitten und Trennung zum Beispiel von den Objekten 76 kann zum Beispiel unter Zuhilfenahme von Signalen der Kamera 64 erfolgen. Beispielsweise werden mittels Bildverarbeitungsalgorithmen Kanten der Objekte 76 detektiert, wodurch die Objekte 76 von der Bodenfläche 18 unterschieden werden können.

Die reinigungsbezogenen Informationen können weiter eine Information für den Benutzer zum Führen der Bodenreinigungsmaschine 12 zur weitergehenden Reinigung umfassen. Dies ist in Figur 3 beispielhaft anhand von Pfeilen 80, 82 gezeigt, die eine jeweilige Verfahrrichtung vorschlagen.

Die reinigungsbezogenen Informationen können weiter Informationen betreffend den erfolgten Einsatz eines Reinigungswerkzeuges bei gereinigten Abschnitten der Bodenfläche 18 bzw. den empfohlenen Einsatz eines Reinigungswerkzeuges bei ungereinigten Abschnitten der Bodenfläche 18 umfassen.

Die reinigungsbezogenen Informationen können ferner beispielsweise den Wert mindestens eines Betriebsparameters bei gereinigten Abschnitten der Bodenfläche 18 bzw. den empfohlenen Wert mindestens eines Betriebsparameters bei ungereinigten Abschnitten der Bodenfläche 18 umfassen.

Betriebsparameter sind beispielsweise die Dosierung der Reinigungschemikalie über die Dosiereinrichtung 42, der Anpressdruck des Reinigungswerkzeugs 32 mittels der Andrückeinrichtung 44 oder die Antriebsleistung der Antriebseinrichtung 34 für das Reinigungswerkzeug 32.

Reinigungsbezogene Informationen können, um vom Benutzer besonders einfach wahrgenommen werden zu können, beispielsweise durch Hervorhebung mittels einer Farbe und/oder einer Textur dargestellt werden. Beispielsweise besteht die Möglichkeit, Abschnitte der Bodenfläche 18, die einen bestimmten Einsatz des Reinigungswerkzeuges 32, eine bestimmte Dosierung der Reinigungschemikalie oder eine bestimmte Antriebsleistung erfordern, farbig oder durch eine Textur hervorzuheben. Weiter besteht zum Beispiel die Möglichkeit, Bahnen, die einander zur Verbesserung des Reinigungsergebnisses überlappen sollen, farbig oder mittels einer Textur hervorzuheben.

Die Bodenreinigungsmaschine 12 kann eine Projektionseinrichtung 84 aufweisen. Über die Projektionseinrichtung 84 können reinigungsbezogene Informationen beispielsweise auf die Bodenfläche 18 projiziert werden, alternativ und/oder ergänzend zur Anzeige an der Anzeigeeinrichtung 68.

Vorzugsweise ist die Möglichkeit gegeben, in der Speichereinrichtung 54 den ermittelten Reinigungspfad 66 zu speichern. Dabei werden vorzugsweise Informationen betreffend den Einsatz des Reinigungswerkzeugs 32 und der Wert mindestens eines Betriebsparameters gespeichert.

Die gespeicherten Informationen können zur Optimierung von Reinigungsvorgängen ausgewertet werden. Beispielsweise kann eine Mehrzahl von abgefahrenen Reinigungspfaden 66 mit diesbezüglichen verknüpften Informationen gespeichert und im Hinblick auf den bestmöglichen Reinigungspfad 66 und/oder das bestmögliche Reinigungsergebnis miteinander verglichen und ausgewertet werden.

Ferner besteht die Möglichkeit der Überprüfung des Reinigungsvorgangs auf Basis der gespeicherten Informationen.

In der Speichereinrichtung 54 kann ein vorgegebener Reinigungspfad 86 gespeichert werden. Der vorgegebene Reinigungspfad ist vorzugsweise verknüpft mit Informationen betreffend den Einsatz des Reinigungswerkzeugs 32 und den Wert mindestens eines Betriebsparameters in der Speichereinrichtung 54 gespeichert.

Der empfohlene Reinigungspfad, in Figur 4 durch eine gestrichelte Linie dargestellt, kann bei Aufnahme des Reinigungsvorgangs am Ausgangspunkt 78 aus der Speichereinrichtung 54 geladen werden.

Günstig ist es, wenn reinigungsbezogene Informationen zur Verfügung gestellt werden. Hierbei bietet sich ebenfalls eine Darstellung mittels augmentierter Realität an der Anzeigeeinrichtung 68 dar. Die mit dem vorgegebenen Reinigungspfad 86 verknüpften reinigungsbezogenen Informationen betreffen beispielsweise Anweisungen zum Verfahren der Bodenreinigungsmaschine 12, eine Darstellung zu reinigender Abschnitte der Bodenfläche 18, Informationen betreffend den empfohlenen Einsatz des Reinigungswerkzeugs 32 und/oder den Wert mindestens eines Betriebsparameters. Bevorzugt können Betriebsparameter automatisch voreingestellt werden.

Ein Betriebsparameter kann vorliegend auch die Geschwindigkeit sein, mit der die Bodenreinigungsmaschine 12 verfahren wird.

Der vorgegebene Reinigungspfad 86 kann beispielsweise vom Benutzer aus der Speichereinrichtung 54 geladen werden.

Vorgesehen sein kann, dass das Bodenreinigungssystem 10 ein Lokalisierungselement 88 umfasst, das dem Raum 20 zugeordnet ist. Mittels der Sensoreinrichtung 56 kann das Lokalisierungselement 88 vorzugsweise erkannt werden. In diesem Fall kann der dem Raum 20 zugeordnete Reinigungspfad 86 geladen werden.

Einer Mehrzahl von Räumen können so jeweilige vorgegebene Reinigungspfade 86 zugeordnet werden.

Der vorgegebene Reinigungspfad 86 kann für den Benutzer eine Information betreffend den Ausgangspunkt 78 umfassen. Diese Information kann zum Beispiel in einer textbasierten oder fotografischen Darstellung des Ausgangspunktes 78 mit dem Vorschlag einer Führungsrichtung für die Bodenreinigungsmaschine 12 bestehen.

Während des Reinigungsvorgangs kann von der Steuereinrichtung 52 überwacht werden, ob der zurückgelegte Reinigungspfad 66 mit dem vorgegebenen Reinigungspfad 86 übereinstimmt. Im Falle einer Abweichung kann der vorgegebene Reinigungspfad 86 nach Abschluss des Reinigungsvorgangs zum Beispiel durch den zurückgelegten Reinigungspfad 66 ersetzt und dieser für künftige Reinigungsvorgänge gespeichert werden. Alternativ oder ergänzend kann der Benutzer darüber informiert werden, dass der Reinigungspfad 66 von dem Reinigungspfad 86 abweicht.

Hinweise des Bodenreinigungssystems 10 können ergänzend zu der oder abweichend von der visuellen Darstellung an der Anzeigeeinrichtung 68 auf unterschiedliche Weise erfolgen, beispielsweise akustisch und/oder haptisch. Anstelle der Anzeigeeinrichtung 68 des Zusatzgerätes 14 kann eine Anzeigeeinrichtung der Bodenreinigungsmaschine 12 verwendet werden. Diese Anzeigeeinrichtung ist zum Beispiel in der Bedieneinrichtung 28 angeordnet und wird vom Zusatzgerät 14 bei dessen Einsatz überdeckt.

### Bezugszeichenliste:

- 10: Bodenreinigungssystem
- 12: Bodenreinigungsmaschine
- 14: Zusatzgerät
- 16: Tablet-Computer
- 17: Smartphone
- 18: Bodenfläche
- 19: Head-mounted-Display
- 20: Raum
- 22: Scheuersaugmaschine
- 24: Bewegungsrichtung
- 26: Rückseite
- 28: Bedieneinrichtung
- 30: Reinigungseinrichtung
- 32: Reinigungswerkzeug
- 34: Antriebseinrichtung
- 36: Vorratsbehälter
- 38: Schmutzaufnahmeeinrichtung
- 40: Schmutzflüssigkeitsbehälter
- 42: Dosiereinrichtung
- 44: Andrückeinrichtung
- 46: Fahrwerk
- 48: Antriebsrad
- 50: Fahrantrieb
- 52: Steuereinrichtung
- 54: Speichereinrichtung
- 56: Sensoreinrichtung
- 58: Radencoder
- 60: Beschleunigungssensor
- 62: Drehratensensor
- 64: Kamera
- 66: zurückgelegter Reinigungspfad
- 68: Anzeigeeinrichtung
- 70: Bildanzeige
- 72: Aufnahme
- 74: Kamera
- 76: Objekt
- 78: Ausgangspunkt
- 80, 82: Pfeil
- 84: Projektionseinrichtung
- 86: vorgegebener Reinigungspfad
- 88: Lokalisierungselement

## Patentansprüche

1. Bodenreinigungssystem, umfassend eine benutzergeführte Bodenreinigungsmaschine (12) zum Reinigen einer Bodenfläche (18), eine Sensoreinrichtung (56), eine Steuereinrichtung (52) und eine ansteuerbare Anzeigeeinrichtung (68), wobei die Bodenreinigungsmaschine (12) eine Bedieneinrichtung (28) für einen Benutzer umfasst, ein Fahrwerk (46) zum Verfahren auf der Bodenfläche (18) und mindestens eine Reinigungseinrichtung (30) mit einem Reinigungswerkzeug (32) und vorzugsweise einer Antriebseinrichtung (34) für das Reinigungswerkzeug (32), wobei von der Steuereinrichtung (52) im Betrieb der Bodenreinigungsmaschine (12) anhand von Signalen der Sensoreinrichtung (56) ein auf der Bodenfläche (18) ausgehend von einem Ausgangspunkt (78) zurückgelegter Reinigungspfad (66) ermittelbar ist und wobei die Steuereinrichtung (52) die Anzeigeeinrichtung (68) zum Anzeigen von reinigungsbezogenen Informationen abhängig vom ermittelten zurückgelegten Reinigungspfad (66) ansteuert.

2. Bodenreinigungssystem nach Anspruch 1, **dadurch gekennzeichnet, dass** der zurückgelegte Reinigungspfad (66) frei von Kartierung ermittelt wird, insbesondere dass keine Karte eines die Bodenfläche (18) aufweisenden Raumes (20) vorgesehen ist, innerhalb welcher Karte der Ausgangspunkt (78) und/oder der Reinigungspfad (66) lokalisiert wird und/oder dass der Ausgangspunkt (78) und/oder der zurückgelegte Reinigungspfad (66) ohne Positionsinformation in Bezug auf die Bodenfläche (18) und/oder einen die Bodenfläche aufweisenden Raum (20) ermittelt wird.

3. Bodenreinigungssystem nach einem der voranstehenden Ansprüche, **dadurch gekennzeichnet, dass** die Sensoreinrichtung (56) als mindestens einen Sensor mindestens eines der Folgenden umfasst oder ausbildet:
- Radencoder (58) für das Fahrwerk (46);
- einen Beschleunigungssensor (60);
- einen Drehratensensor (62);
- eine Kamera (64).

4. Bodenreinigungssystem nach einem der voranstehenden Ansprüche, **dadurch gekennzeichnet, dass** der zurückgelegte Reinigungspfad (66) nur ermittelt wird, wenn die Antriebseinrichtung (34) mindestens eines Reinigungswerkzeuges (32) aktiviert ist, und/oder dass das Bodenreinigungssystem (10) eine Kamera (64, 74) umfasst zum Bereitstellen von Aufnahmen (72) einer der Bodenreinigungsmaschine (12) in einer Bewegungsrichtung (24) vorausgelagerten Umgebung und dass an der Anzeigeeinrichtung (68) die Aufnahmen gemeinsam mit den reinigungsbezogenen Informationen darstellbar sind.

5. Bodenreinigungssystem nach Anspruch 4, **dadurch gekennzeichnet, dass** zumindest eines der Folgenden gilt:
- die reinigungsbezogenen Informationen werden den Aufnahmen der Umgebung an der Anzeigeeinrichtung (68) grafisch überlagert dargestellt;
- die Kamera (64, 74) ist in definierter Relativposition an der Bodenreinigungsmaschine (12) angeordnet;
- die Bodenreinigungsmaschine (12) oder ein tragbares Zusatzgerät (14) umfasst die Kamera (64, 74).

6. Bodenreinigungssystem nach einem der voranstehenden Ansprüche, **dadurch gekennzeichnet, dass** die reinigungsbezogenen Informationen zumindest eines der Folgenden umfassen:
- eine Darstellung bislang gereinigter Abschnitte der Bodenfläche (18);
- eine Darstellung noch nicht gereinigter Abschnitte der Bodenfläche (18);
- eine Darstellung noch zu reinigender Abschnitte der Bodenfläche (18);
- Informationen für den Benutzer zum Führen der Bodenreinigungsmaschine (12), insbesondere Anweisungen zur Verfahrrichtung (80, 82) der Bodenreinigungsmaschine (12);
- Informationen betreffend den erfolgten Einsatz mindestens eines Reinigungswerkzeuges (32) bei gereinigten Abschnitten der Bodenfläche (18);
- Informationen betreffend den empfohlenen Einsatz mindestens eines Reinigungswerkzeuges (32) bei ungereinigten Abschnitten der Bodenfläche (18);
- Informationen betreffend den Wert mindestens eines Betriebsparameters bei gereinigten Abschnitten der Bodenfläche (18);
- Informationen betreffend den empfohlenen Wert mindestens eines Betriebsparameters bei ungereinigten Abschnitten der Bodenfläche (18).

7. Bodenreinigungssystem nach einem der voranstehenden Ansprüche, **dadurch gekennzeichnet, dass** die Bodenreinigungsmaschine (12) zumindest eines der Folgenden zumindest teilweise umfasst oder ausbildet:
- die Sensoreinrichtung (56);
- die Steuereinrichtung (52);
- die Anzeigeeinrichtung (68).

8. Bodenreinigungssystem nach einem der voranstehenden Ansprüche, **dadurch gekennzeichnet, dass** das Bodenreinigungssystem (10) mindestens ein tragbares Zusatzgerät (14) umfasst, das über zusammenwirkende Kommunikationsschnittstellen mit der Bodenreinigungsmaschine (12) in Wirkverbindung steht.

9. Bodenreinigungssystem nach Anspruch 8, **dadurch gekennzeichnet, dass** das Zusatzgerät mindestens eines der Folgenden zumindest teilweise umfasst oder ausbildet:
- die Sensoreinrichtung (56);
- die Steuereinrichtung (52);
- die Anzeigeeinrichtung (68).

10. Bodenreinigungssystem nach Anspruch 8 oder 9, **dadurch gekennzeichnet, dass** als tragbares Zusatzgerät (14) ein Tablet-Computer (16), ein Smartphone (17) oder ein Head-mounted-Display (19) vorgesehen ist, beispielsweise ausgestaltet als Datenbrille und/oder die Bodenreinigungsmaschine (12) eine vorzugsweise an der Bedieneinrichtung (28) angeordnete Aufnahme (72) zur lösbaren Anordnung des mindestens einen tragbaren Zusatzgerätes umfasst.

11. Bodenreinigungssystem nach einem der voranstehenden Ansprüche, **dadurch gekennzeichnet, dass** das Bodenreinigungssystem (10) eine Speichereinrichtung (54) zum Speichern mindestens eines zurückgelegten und/oder zum Speichern mindestens eines vorgegebenen Reinigungspfades (66, 86) umfasst.

12. Bodenreinigungssystem nach Anspruch 11, **dadurch gekennzeichnet, dass** zumindest eines der Folgenden gilt:
- die Bodenreinigungsmaschine (12) und/oder das Zusatzgerät (14) umfasst die Speichereinrichtung (54) zumindest teilweise;
- der zurückgelegte Reinigungspfad (66) und/oder der vorgegebene Reinigungspfad (86) ist verknüpft mit reinigungsbezogenen Informationen betreffend den Einsatz mindestens eines Reinigungswerkzeuges (32) und/oder den Wert mindestens eines Betriebsparameters speicherbar;
- eine Mehrzahl zurückgelegter Reinigungspfade (66) ist speicherbar und hinsichtlich eines optimierten Reinigungspfades (66) auswertbar, insbesondere verknüpft mit Informationen betreffend den erfolgten Einsatz mindestens eines Reinigungswerkzeuges (32) und/oder den Wert mindestens eines Betriebsparameters.

13. Bodenreinigungssystem nach Anspruch 11 oder 12, **dadurch gekennzeichnet, dass** der mindestens eine vorgegebene Reinigungspfad (86) bei Aufnahme der Reinigung aktivierbar und reinigungsbezogene Informationen an der Anzeigeeinrichtung (68) darstellbar sind, insbesondere zumindest eine der folgenden Informationen:
- Informationen für den Benutzer zum Führen der Bodenreinigungsmaschine (12), insbesondere Anweisungen zur Verfahrrichtung (80, 82) der Bodenreinigungsmaschine (12);
- eine Darstellung zu reinigender Abschnitte der Bodenfläche (18);
- Informationen betreffend den empfohlenen Einsatz mindestens eines Reinigungswerkzeuges (32) bei ungereinigten Abschnitten der Bodenfläche (18);
- Informationen betreffend den empfohlenen Wert mindestens eines Betriebsparameters bei ungereinigten Abschnitten der Bodenfläche (18).

14. Bodenreinigungssystem nach Anspruch 13, **dadurch gekennzeichnet, dass** das Bodenreinigungssystem (10) eine Kamera (64, 74) umfasst zum Bereitstellen von Aufnahmen einer der Bodenreinigungsmaschine (12) in einer Bewegungsrichtung (24) vorausgelagerten Umgebung und dass an der Anzeigeeinrichtung (68) die Aufnahmen gemeinsam mit den reinigungsbezogenen Informationen darstellbar sind.

15. Bodenreinigungssystem nach einem der Ansprüche 11 bis 14, **dadurch gekennzeichnet, dass** zumindest eines der Folgenden gilt:
- der vorgegebene Reinigungspfad (86) umfasst eine Information über den Ausgangspunkt (78) für den Reinigungsvorgang, die an der Anzeigeeinrichtung (68) darstellbar ist;
- das Bodenreinigungssystem (10) umfasst mindestens ein Lokalisierungselement (88), das einem zu reinigenden Raum (20) zugeordnet ist, wobei in der Speichereinrichtung (54) eine Verknüpfung des Raumes (20) mit dem vorgegebenen Reinigungspfad (86) gespeichert ist, und mittels der Sensoreinrichtung (56) ist das Lokalisierungselement (88) erfassbar und der vorgegebene Reinigungspfad (66) abhängig vom erkannten Lokalisierungselement (88) bereitstellbar;
- der zurückgelegte Reinigungspfad (66) und der vorgegebene Reinigungspfad (86) sind von der Steuereinrichtung (52) auf Übereinstimmung prüfbar, wobei vorzugsweise bei fehlender Übereinstimmung ein diesbezüglicher Hinweis an den Benutzer insbesondere an der Anzeigeeinrichtung (68) ausgebbar ist und/oder wobei bei fehlender Übereinstimmung der in der Speichereinrichtung (54) gespeicherte vorgegebene Reinigungspfad (86) nach Abschluss der Reinigung durch den ermittelten Reinigungspfad (66) ersetzt wird.

16. Bodenreinigungssystem nach einem der voranstehenden Ansprüche, **dadurch gekennzeichnet, dass** das Bodenreinigungssystem (10) eine Projektionseinrichtung (84) umfasst und dass reinigungsbezogene Informationen auf die Bodenfläche (18) projizierbar sind.

17. Bodenreinigungssystem nach einem der voranstehenden Ansprüche, **dadurch gekennzeichnet, dass** zumindest eines der Folgenden gilt:
- die Bodenreinigungsmaschine (12) umfasst einen Fahrantrieb (50) für Antriebsräder (48) des Fahrwerks (46);
- die Bodenreinigungsmaschine (12) ist eine Nachlaufmaschine, eine Aufsitzmaschine oder eine Aufstehmaschine;
- die Bodenreinigungsmaschine (12) ist eine Scheuersaugmaschine (22) oder eine Kehrmaschine;
- das Bodenreinigungssystem (10) umfasst eine Mehrzahl von Bodenreinigungsmaschinen (12).

## Claims

1. Floor cleaning system, comprising a user-guided floor cleaning machine (12) for cleaning a floor surface (18), a sensor device (56), a control device (52), and an actuatable display device (68), wherein the floor cleaning machine (12) comprises an operating device (28) for a user, a chassis (46) for moving the cleaning machine over the floor surface (18), and at least one cleaning device (30) having a cleaning tool (32) and preferably a drive device (34) for the cleaning tool (32), wherein, during operation of the floor cleaning machine (12), a cleaning path (66) along which, proceeding from a starting point (78), the cleaning machine travels over the floor surface (18) is determinable by the control device (52) on the basis of signals from the sensor device (56), and wherein the control device (52) actuates the display device (68) in order to display cleaning-related information, depending upon the cleaning path (66) along which the cleaning machine is determined to have traveled.

2. Floor cleaning system in accordance with claim 1, **characterized in that** the traveled cleaning path (66) is determined free of mapping, in particular, that no map of a room (20) comprising the floor surface (18), within which map the starting point (78) and/or the cleaning path (66) is localized, is provided and/or **in that** the starting point (78) and/or the traveled cleaning path (66) is determined without position information with respect to the floor surface (18) and/or a room (20) comprising the floor surface.

3. Floor cleaning system in accordance with one of the preceding claims, **characterized in that** the sensor device (56) comprises or forms, as at least one sensor, at least one of the following:
- wheel encoder (58) for the chassis (46);
- an acceleration sensor (60);
- a rotation rate sensor (62);
- a camera (64).

4. Floor cleaning system in accordance with one of the preceding claims, **characterized in that** the traveled cleaning path (66) is determined only when the drive device (34) of at least one cleaning tool (32) is activated and/or **in that** the floor cleaning system (10) comprises a camera (64, 74) for providing images (72) of a surrounding area located ahead of the floor cleaning machine (12) in a direction of movement (24), and **in that** the images are displayable on the display device (68) together with the cleaning-related information.

5. Floor cleaning system in accordance with claim 4, **characterized in that** at least one of the following applies:
- the cleaning-related information is displayed in a manner graphically superimposed on the images of the surrounding area on the display device (68);
- the camera (64, 74) is arranged in a defined relative position on the floor cleaning machine (12);
- the floor cleaning machine (12) or a portable accessory device (14) comprises the camera (64, 74).

6. Floor cleaning system in accordance with one of the preceding claims, **characterized in that** the cleaning-related information comprises at least one of the following:
- a display of thus far cleaned sections of the floor surface (18);
- a display of sections of the floor surface that have not yet been cleaned (18);
- a display of sections of the floor surface that are still to be cleaned (18);
- information for the user for guiding the floor cleaning machine (12), in particular, instructions on the direction of travel (80, 82) of the floor cleaning machine (12);
- information concerning the use that has taken place of at least one cleaning tool (32) for cleaned sections of the floor surface (18);
- information concerning the recommended use of at least one cleaning tool (32) for uncleaned sections of the floor surface (18);
- information concerning the value of at least one operating parameter for cleaned sections of the floor surface (18);
- information concerning the recommended value of at least one operating parameter for uncleaned sections of the floor surface (18).

7. Floor cleaning system in accordance with one of the preceding claims, **characterized in that** the floor cleaning machine (12) at least partially comprises or forms at least one of the following:
- the sensor device (56);
- the control device (52);
- the display device (68).

8. Floor cleaning system in accordance with one of the preceding claims, **characterized in that** the floor cleaning system (10) comprises at least one portable accessory device (14), which is operatively connected to the floor cleaning machine (12) via cooperating communications interfaces.

9. Floor cleaning system in accordance with claim 8, **characterized in that** the accessory device at least partially comprises or forms at least one of the following:
- the sensor device (56);
- the control device (52);
- the display device (68).

10. Floor cleaning system in accordance with claim 8 or 9, **characterized in that** a tablet computer (16), a smartphone (17), or a head-mounted display (19), for example, configured as data goggles, is provided as a portable accessory device (14) and/or the floor cleaning machine (12) comprises a receptacle (72), preferably arranged on the operating device (28), for detachably arranging the at least one portable accessory device.

11. Floor cleaning system in accordance with one of the preceding claims, **characterized in that** the floor cleaning system (10) comprises a storage device (54) for storing at least one traveled cleaning path and/or for storing at least one predetermined cleaning path (66, 86).

12. Floor cleaning system in accordance with claim 11, **characterized in that** at least one of the following applies:
- the floor cleaning machine (12) and/or the accessory device (14) at least partially comprises the storage device (54);
- the traveled cleaning path (66) and/or the predetermined cleaning path (86) is storable so as to be linked to cleaning-related information concerning the use of at least one cleaning tool (32) and/or the value of at least one operating parameter;
- a plurality of traveled cleaning paths (66) is storable and can, with regard to an optimized cleaning path (66), be evaluated, in particular linked to information concerning the use that has taken place of at least one cleaning tool (32) and/or the value of at least one operating parameter.

13. Floor cleaning system in accordance with claim 11 or 12, **characterized in that** the at least one predetermined cleaning path (86) is activatable when cleaning is initiated, and cleaning-related information is displayable on the display device (68), in particular, at least one of the following items of information:
- information for the user for guiding the floor cleaning machine (12), in particular, instructions on the direction of travel (80, 82) of the floor cleaning machine (12);
- a display of sections of the floor surface to be cleaned (18);
- information concerning the recommended use of at least one cleaning tool (32) for uncleaned sections of the floor surface (18);
- information concerning the recommended value of at least one operating parameter for uncleaned sections of the floor surface (18).

14. Floor cleaning system in accordance with claim 13, **characterized in that** the floor cleaning system (10) comprises a camera (64, 74) for providing images of a surrounding area ahead of the floor cleaning machine (12) in a direction of movement (24), and **in that** the images are displayable on the display device (68) together with the cleaning-related information.

15. Floor cleaning system in accordance with one of claims 11 through 14, **characterized in that** at least one of the following applies;
- the predetermined cleaning path (86) comprises information concerning the starting point (78) for the cleaning process, which information is displayable on the display device (68);
- the floor cleaning system (10) comprises at least one localization element (88) that is assigned to a room (20) to be cleaned, wherein a link between the room (20) and the predetermined cleaning path (86) is stored in the storage device (54), and the localization element (88) is detectable by means of the sensor device (56), and the predetermined cleaning path (66) is providable depending upon the detected localization element (88);
- the traveled cleaning path (66) and the predetermined cleaning path (86) are checkable for a match by the control device (52), wherein preferably if there is no match, an indication to this effect is outputable to the user, in particular, on the display device (68) and/or wherein, if there is no match, the predetermined cleaning path (86) stored in the storage device (54) is replaced by the determined cleaning path (66) after completion of the cleaning.

16. Floor cleaning system in accordance with one of the preceding claims, **characterized in that** the floor cleaning system (10) comprises a projection device (84) and **in that** cleaning-related information is projectable onto the floor surface (18).

17. Floor cleaning system in accordance with one of the preceding claims, **characterized in that** at least one of the following applies:
- the floor cleaning machine (12) comprises a traction drive (50) for drive wheels (48) of the chassis (46);
- the floor cleaning machine (12) is a walk-behind machine, a ride-on machine, or a stand-upon machine;
- the floor cleaning machine (12) is a scrubbing machine (22) or a sweeper;
- the floor cleaning system (10) comprises a plurality of floor cleaning machines (12).

## Revendications

1. Système de nettoyage des sols, comprenant une machine de nettoyage des sols (12) guidée par un utilisateur pour le nettoyage d'une surface de sol (18), un dispositif de capteur (56), un dispositif de commande (52) et un dispositif d'affichage (68) pouvant être commandé, dans lequel la machine de nettoyage des sols (12) comprend un dispositif de commande utilisateur (28) pour un utilisateur, un mécanisme de roulement (46) pour se déplacer sur la surface de sol (18) et au moins un dispositif de nettoyage (30) avec un outil de nettoyage (32) et de préférence un dispositif d'entraînement (34) pour l'outil de nettoyage (32), dans lequel une trajectoire de nettoyage (66) parcourue sur la surface de sol (18) à partir d'un point de départ (78) peut être déterminée par le dispositif de commande (52) lors du fonctionnement de la machine de nettoyage des sols (12) à l'aide de signaux du dispositif de capteur (56) et dans lequel le dispositif de commande (52) commande le dispositif d'affichage (68) pour l'affichage d'informations liées au nettoyage en fonction de la trajectoire de nettoyage (66) parcourue déterminée.

2. Système de nettoyage des sols selon la revendication 1, **caractérisé en ce que** la trajectoire de nettoyage (66) parcourue est déterminée sans cartographie, en particulier qu'aucune carte d'une pièce (20) présentant la surface de sol (18) n'est prévue, carte à l'intérieur de laquelle le point de départ (78) et/ou la trajectoire de nettoyage (66) est localisé(e) et/ou que le point de départ (78) et/ou la trajectoire de nettoyage (66) parcourue est déterminé(e) sans information de position par rapport à la surface de sol (18) et/ou une pièce (20) présentant la surface de sol.

3. Système de nettoyage des sols selon l'une quelconque des revendications précédentes, **caractérisé en ce que** le dispositif de capteur (56) sous la forme d'au moins un capteur comprend ou réalise au moins un de ce qui suit :
- des codeurs incrémentaux (58) pour le mécanisme de roulement (46) ;
- un capteur d'accélération (60) ;
- un capteur de vitesse de rotation (62) ;
- une caméra (64).

4. Système de nettoyage des sols selon l'une quelconque des revendications précédentes, **caractérisé en ce que** la trajectoire de nettoyage (66) parcourue n'est déterminée que lorsque le dispositif d'entraînement (34) d'au moins un outil de nettoyage (32) est activé, et/ou que le système de nettoyage des sols (10) comprend une caméra (64, 74) pour la fourniture de prises de vue (72) d'un environnement en amont de la machine de nettoyage des sols (12) dans une direction de mouvement (24) et que les prises de vue conjointement avec les informations liées au nettoyage peuvent être représentées sur le dispositif d'affichage (68).

5. Système de nettoyage des sols selon la revendication 4, **caractérisé en ce qu'**au moins un de ce qui suit s'applique :
- les informations liées au nettoyage sont représentées superposées graphiquement aux prises de vue de l'environnement sur le dispositif d'affichage (68) ;
- la caméra (64, 74) est disposée sur la machine de nettoyage des sols (12) dans une position relative définie ;
- la machine de nettoyage des sols (12) ou un appareil auxiliaire portable (14) comprend la caméra (64, 74).

6. Système de nettoyage des sols selon l'une quelconque des revendications précédentes, **caractérisé en ce que** les informations liées au nettoyage comportent au moins un de ce qui suit :
- une représentation des parties de la surface de sol (18) nettoyées jusqu'ici ;
- une représentation des parties de la surface de sol (18) pas encore nettoyées ;
- une représentation des parties de la surface de sol (18) encore à nettoyer ;
- des informations pour l'utilisateur pour le guidage de la machine de nettoyage des sols (12), en particulier des instructions relatives à la direction de déplacement (80, 82) de la machine de nettoyage des sols (12) ;
- des informations concernant l'utilisation effectuée d'au moins un outil de nettoyage (32) pour les parties de la surface de sol (18) nettoyées ;
- des informations concernant l'utilisation recommandée d'au moins un outil de nettoyage (32) pour les parties de la surface de sol (18) non nettoyées ;
- des informations concernant la valeur d'au moins un paramètre de fonctionnement pour les parties de la surface de sol (18) nettoyées ;
- des informations concernant la valeur recommandée d'au moins un paramètre de fonctionnement pour les parties de la surface de sol (18) non nettoyées.

7. Système de nettoyage des sols selon l'une quelconque des revendications précédentes, **caractérisé en ce que** la machine de nettoyage des sols (12) comprend ou forme au moins en partie au moins un de ce qui suit :
- le dispositif de capteur (56) ;
- le dispositif de commande (52) ;
- le dispositif d'affichage (68).

8. Système de nettoyage des sols selon l'une quelconque des revendications précédentes, **caractérisé en ce que** le système de nettoyage des sols (10) comprend au moins un appareil auxiliaire portable (14), qui est en liaison fonctionnelle avec la machine de nettoyage des sols (12) par l'intermédiaire d'interfaces de communication en coopération.

9. Système de nettoyage des sols selon la revendication 8, **caractérisé en ce que** l'appareil auxiliaire comprend ou réalise au moins en partie au moins un de ce qui suit :
- le dispositif de capteur (56) ;
- le dispositif de commande (52) ;
- le dispositif d'affichage (68).

10. Système de nettoyage des sols selon la revendication 8 ou 9, **caractérisé en ce qu'**une tablette PC (16), un smartphone (17) ou un visiocasque (19), par exemple conçu sous la forme de lunettes à réalité augmentée, est prévu(e) comme appareil auxiliaire portable (14), et/ou la machine de nettoyage des sols (12) comprend un logement (72) de préférence disposé sur le dispositif de commande utilisateur (28) pour la disposition détachable du au moins un appareil auxiliaire portable.

11. Système de nettoyage des sols selon l'une quelconque des revendications précédentes, **caractérisé en ce que** le système de nettoyage des sols (10) comprend un dispositif de mémoire (54) pour la mise en mémoire d'au moins une trajectoire de nettoyage (66, 86) parcourue et/ou pour la mise en mémoire d'au moins une prédéfinie.

12. Système de nettoyage des sols selon la revendication 11, **caractérisé en ce qu'**au moins un de ce qui suit s'applique :
- la machine de nettoyage des sols (12) et/ou l'appareil auxiliaire (14) comprend au moins en partie le dispositif de mémoire (54) ;
- la trajectoire de nettoyage (66) parcourue et/ou la trajectoire de nettoyage (86) prédéfinie peut, combinée aux informations liées au nettoyage concernant l'utilisation d'au moins d'un outil de nettoyage (32) et/ou la valeur d'au moins un paramètre de fonctionnement, être mise en mémoire ;
- une pluralité de trajectoires de nettoyage (66) parcourues peut être mise en mémoire et peut être évaluée pour ce qui est d'une trajectoire de nettoyage (66) optimisée, en particulier combinée à des informations concernant l'utilisation effectuée d'au moins un outil de nettoyage (32) et/ou la valeur d'au moins un paramètre de fonctionnement.

13. Système de nettoyage des sols selon la revendication 11 ou 12, **caractérisé en ce que** la au moins une trajectoire de nettoyage (86) prédéfinie peut être activée au début du nettoyage et des informations liées au nettoyage peuvent être représentées sur le dispositif d'affichage (68), en particulier au moins l'une des informations suivantes :
- des informations pour l'utilisateur pour le guidage de la machine de nettoyage des sols (12), en particulier des instructions pour la direction de déplacement (80, 82) de la machine de nettoyage des sols (12) ;
- une représentation des parties de la surface de sol (18) à nettoyer ;
- des informations concernant l'utilisation recommandée d'au moins un outil de nettoyage (32) pour les parties de la surface de sol (18) non nettoyées ;
- des informations concernant la valeur recommandée d'au moins un paramètre de fonctionnement pour les parties de la surface de sol (18) non nettoyées.

14. Système de nettoyage des sols selon la revendication 13, **caractérisé en ce que** le système de nettoyage des sols (10) comprend une caméra (64, 74) pour la fourniture de prises de vue d'un environnement en amont de la machine de nettoyage des sols (12) dans une direction de mouvement (24) et que les prises de vue peuvent être représentées conjointement avec les informations liées au nettoyage sur le dispositif d'affichage (68).

15. Système de nettoyage des sols selon l'une quelconque des revendications 11 à 14, **caractérisé en ce qu'**au moins un de ce qui suit s'applique :
- la trajectoire de nettoyage (86) prédéfinie comprend une information sur le point de départ (78) pour le processus de nettoyage, qui peut être représentée sur le dispositif d'affichage (68) ;
- le système de nettoyage des sols (10) comprend au moins un élément de localisation (88), qui est associé à une pièce (20) à nettoyer, dans lequel une combinaison de la pièce (20) avec la trajectoire de nettoyage (86) prédéfinie est mise en mémoire dans le dispositif de mémoire (54), et l'élément de localisation (88) peut être détecté au moyen du dispositif de capteur (56) et la trajectoire de nettoyage (66) prédéfinie peut être fournie en fonction de l'élément de localisation (88) repéré ;
- la trajectoire de nettoyage (66) parcourue et la trajectoire de nettoyage (86) prédéfinie peuvent être contrôlées par le dispositif de commande (52) en vue d'y vérifier la présence d'une concordance, dans lequel de préférence en l'absence de concordance une indication s'y rapportant peut être délivrée à l'utilisateur en particulier sur le dispositif d'affichage (68) et/ou dans lequel en l'absence de concordance la trajectoire de nettoyage (86) prédéfinie mise en mémoire dans le dispositif de mémoire (54) est remplacée à la fin du nettoyage par la trajectoire de nettoyage (66) déterminée.

16. Système de nettoyage des sols selon l'une quelconque des revendications précédentes, **caractérisé en ce que** le système de nettoyage des sols (10) comprend un dispositif de projection (84) et que des informations liées au nettoyage peuvent être projetées sur la surface de sol (18).

17. Système de nettoyage des sols selon l'une quelconque des revendications précédentes, **caractérisé en ce qu'**au moins un de ce qui suit s'applique :
- la machine de nettoyage des sols (12) comprend un entraînement de roulement (50) pour les roues motrices (48) du mécanisme de roulement (46) ;
- la machine de nettoyage des sols (12) est une machine guidée à main, une machine à conducteur porté assis ou une machine à conducteur porté debout ;
- la machine de nettoyage des sols (12) est une autolaveuse (22) ou une balayeuse ;
- le système de nettoyage des sols (10) comprend une pluralité de machines de nettoyage des sols (12).
